# FASCICULE DE BREVET EUROPEEN

(11) **EP 0 718 731 B1**
(45) Date de publication et mention de la délivrance du brevet: **24.02.1999**
(21) Numéro de dépôt: 95402633.2
(22) Date de dépôt: 22.11.1995
(51) Int. Cl.: G05D 1/00

(54) **Dispositif pour l'actionnement d'un organe commandé pour un aéronef, tel que notamment un hélicoptère, à commandes de vol électriques**
Vorrichtung zum Betreiben eines gesteuerten Elementes für ein Flugzeug, insbesondere Hubschrauber, mit elektrischen Flugsteuerungen
Arrangement for actuating a controlled element for an aircraft, especially a helicopter, with electrical flight control system

(30) Priorité: 21.12.1994 FR 9415404
(43) Date de publication de la demande: 26.06.1996
(73) Titulaire: EUROCOPTER, F-13725 Marignane Cédex (FR)
(72) Inventeur: Damotte, Sylvain Pascal Frédéric, F-13510 Eguilles (FR)
(74) Mandataire: Bonnetat, Christian

(56) Documents cités:
- EP-A- 0 125 746
- EP-A- 0 179 209
- EP-A- 0 401 079
- FR-A- 2 330 591
- GB-A- 2 065 042
- US-A- 4 500 967
- US-A- 4 527 242
- US-H- H 703

## Description

La présente invention concerne un dispositif pour l'actionnement d'un organe commandé pour un aéronef, tel que notamment un hélicoptère, à commandes de vol électriques. Dans le cas d'un hélicoptère, l'organe commandé pourra être le rotor principal.

Comme cela est par exemple illustré par les documents US-H-703, EP-A-0 401 079 et GB-A-2 065 042, dans des aéronefs équipés de commande de vol électriques, les actions du pilote sont généralement mesurées à partir des informations de déplacement d'un organe de commande (par exemple, manche, minimanche ou palonnier), lesquelles sont transformées en objectif de pilotage par un calculateur de vol qui assure le contrôle du ou des organes commandés correspondants (actionneurs) de façon que l'objectif de pilotage soit rempli. Ce déplacement s'effectue généralement par action du pilote au travers d'une liaison élastique de rappel vers la position neutre, laquelle est généralement assurée par un moteur. L'avantage essentiel procuré par des organes de commande de ce type consiste en ce que le gradient d'effort donne au pilote un retour d'information (sensation tactile) sur l'amplitude du déplacement commandé. Toutefois, pour maintenir l'organe de commande dans une position d'ancrage fixée par le pilote, alors que ce dernier relâche son action sur l'organe de commande, il est nécessaire de prévoir un dispositif de débrayage et de recentrage des efforts, généralement appelé "trim release" en aéronautique, ou de modification lente de l'ancrage de référence, dit "beep trim". De tels dispositifs sont commandés par des boutons prévus sur l'organe de commande, actionnant le moteur de celui-ci qui agit sur les moyens élastiques de rappel.

Ce dispositif de commande donne une entière satisfaction pour des lois de pilotage dites "conventionnelles", c'est-à-dire basées sur une liaison directe manche-servocommande sur laquelle on ajoute des aides de pilotage d'amplitude limitée telles que des stabilisations, des découplages.

Cependant, notamment avec des lois de pilotage évoluées pour lesquelles la relation directe manche-servocommande n'existe plus, une telle application des commandes de vol électriques d'un aéronef, commandées à partir des déplacements de l'organe de commande précité, pose encore un certain nombre de problèmes :
- il n'existe plus de relation directe entre la position du ou des organes commandés et celle de l'organe de commande, de sorte que le pilote ne connaît plus la marge de commande restant jusqu'aux butées,
- pour une même situation de vol, en loi évoluée et en loi directe, les positions de l'organe de commande sont différentes, de sorte que le pilote doit gérer ou subir cet écart lors des commutations de loi.

La présente invention a pour but d'éviter ces inconvénients et concerne un dispositif amélioré pour l'actionnement d'un organe commandé d'un aéronef.

A cette fin, selon l'invention, le dispositif à commandes de vol électriques pour aéronef, notamment un hélicoptère, comportant :
- un organe de commande volontaire, destiné à être actionné par le pilote dudit aéronef ;
- un calculateur de pilotage, recevant des ordres de la part dudit organe de commande volontaire ;
- des moyens d'actionnement, tels qu'une servocommande, commandés par ledit calculateur de pilotage en fonction desdits ordres de l'organe de commande volontaire ; et
- un organe commandé, actionné par lesdits moyens d'actionnement,
est caractérisé en ce qu'il comporte des moyens d'asservissement recevant des informations sur la position dudit organe commandé et comprenant un moteur susceptible de déplacer ledit organe de commande volontaire pour asservir la position de ce dernier à celle dudit organe commandé.

Ainsi, la position de l'organe de commande, par exemple un manche, des pédales ou un minimanche, représente toujours, pour le pilote, la position de l'organe commandé (une gouverne ou un rotor), c'est-à-dire que cela permet notamment de confirmer que l'action du pilote sur l'organe de commande s'est bien traduite par l'action souhaitée sur l'organe commandé.

Par ailleurs, le dispositif peut également comprendre au moins un capteur pour détecter la position de l'organe commandé et dont le signal permet de commander le moteur de déplacement de l'organe de commande volontaire pour l'amener dans une position correspondant à celle de l'organe commandé.

Dans un premier cas de pilotage en déplacement, l'organe de commande volontaire est relié au moteur de déplacement de celui-ci par une liaison comportant des moyens de rappel élastiques.

Dans un second cas de pilotage en effort, l'organe de commande volontaire est relié au moteur de déplacement de celui-ci par une liaison essentiellement rigide, comme une barre reliant le manche au moteur d'actionnement.

Avantageusement, un filtre est prévu entre lesdits moyens d'actionnement et le moteur de déplacement de l'organe de commande volontaire.

Par ailleurs, des moyens transducteurs sont prévus entre l'organe de commande volontaire et le calculateur de pilotage, lesquels, suivant le type de pilotage, sont constitués par des moyens de recopie de la position de l'organe de commande volontaire ou au moins un capteur d'effort.

De plus, une tringlerie de secours mécanique peut être prévue entre les moyens d'actionnement et le moteur de déplacement de l'organe de commande volontaire.

De préférence, des moyens d'amortissement mécaniques sont associés à ladite tringlerie, des butées pouvant être prévues de part et d'autre desdits moyens d'amortissement mécaniques pour limiter l'effet de ceux-ci. Avantageusement, il est prévu un moyen d'annulation de l'effet du moteur de déplacement de l'organe de commande volontaire.

Les figures du dessin annexé feront bien comprendre comment l'invention peut être réalisée. Sur ces figures, des références identiques désignent des éléments semblables.

La figure 1 est un schéma synoptique du dispositif selon l'invention.

La figure 2 est un schéma d'un premier exemple de réalisation du dispositif selon l'invention.

La figure 3 est un schéma d'un second exemple de réalisation du dispositif selon l'invention.

La figure 4 montre une tringlerie de secours mécanique, utilisable dans l'exemple de réalisation de la figure 3.

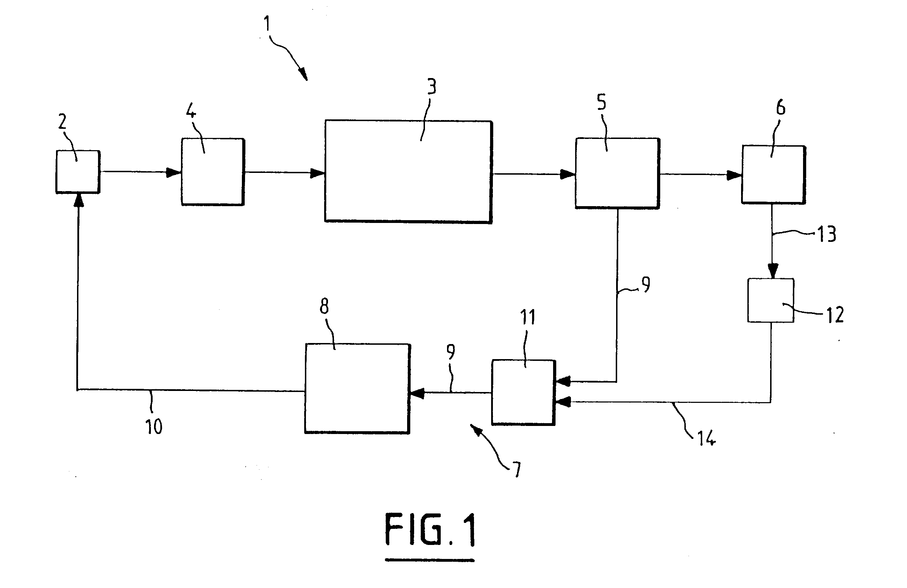

Comme montré sur la figure 1, le dispositif 1 selon l'invention comprend un organe de commande volontaire 2, lequel peut être un manche, un minimanche ou un palonnier et qui est destiné à être soumis à l'action du pilote de l'aéronef, tel que notamment un hélicoptère (non représenté). Le dispositif comprend par ailleurs un calculateur 3 de pilotage en fonction de l'action du pilote sur l'organe de commande volontaire 2. Le calculateur 3 est relié à l'organe de commande 2 par l'intermédiaire d'un transducteur 4, décrit plus en détail par la suite. Par ailleurs, le calculateur 3 est relié à des moyens d'actionnement 5, tels qu'une servocommande, de l'organe commandé 6. Ce dernier peut être, dans le cas d'un avion, une gouverne, ou dans le cas d'un hélicoptère, un rotor ou une gouverne.

Conformément à l'invention, des moyens d'asservissement 7 de la position de l'organe de commande 2 à la position de l'organe commandé 6 sont prévus. Plus précisément, les moyens d'asservissement 7 comprennent un moteur 8, relié, d'une part, à la servocommande 5 par une liaison 9 et, d'autre part, à l'organe de commande 2 par une liaison 10, lequel moteur est destiné à déplacer l'organe de commande 2 en fonction de la position de la servocommande 5. Comme montré sur la figure 1, un filtre 11 peut être prévu entre la servocommande 5 et le moteur 8.

Il peut être également prévu au moins un capteur 12, relié à l'organe commandé 6 par la liaison 13 et au moteur 8 par la liaison 14, pour détecter la position de l'organe commandé et dont le signal permet de commander le moteur 8 d'actionnement de l'organe de commande 2 pour l'amener dans une position correspondant à celle de l'organe commandé. Le capteur 12 pourrait être également incorporé dans la servocommande 5.

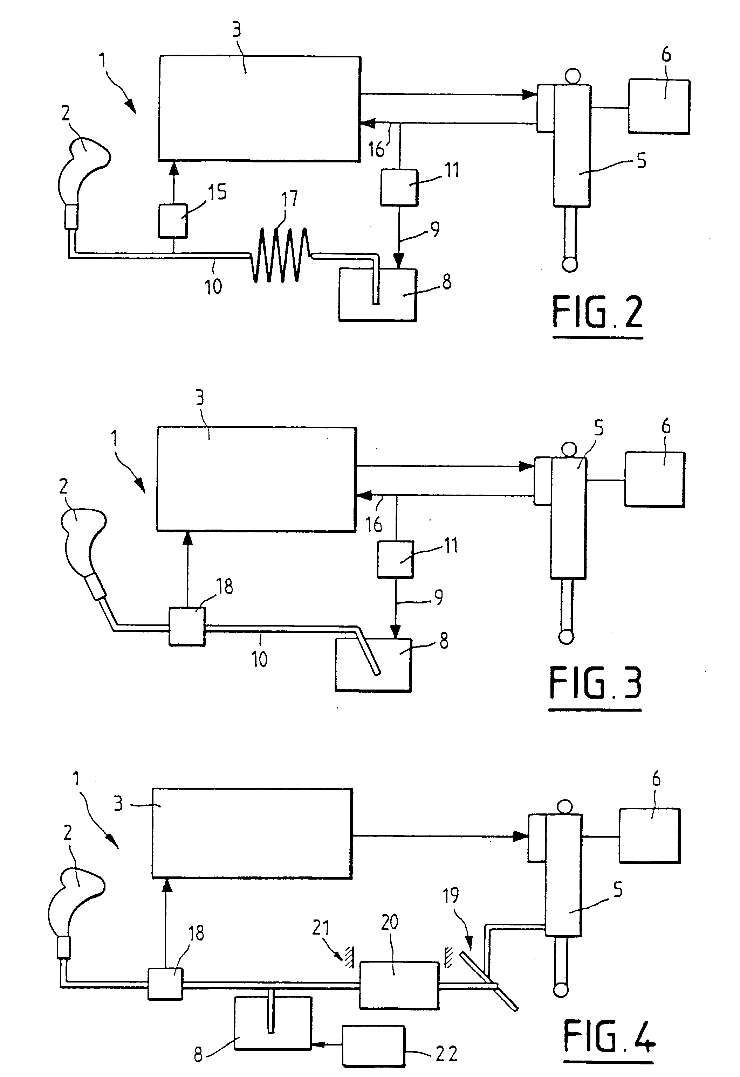

La figure 2 montre un premier exemple de réalisation du dispositif 1 selon l'invention. Dans ce cas, l'organe de commande 2, montré à titre illustratif sous forme de minimanche, agit en déplacement à l'encontre d'une force de rappel, permettant de fournir au pilote une sensation d'effort. La position du manche 2 est recopiée dans le transducteur 15 avant d'être fournie au calculateur de pilotage 3 qui délivre un ordre de commande à la servocommande 5 suivant le principe général décrit ci-dessus. En retour, la servocommande 5 fournit des informations sur l'exécution de cet ordre, d'une part au calculateur 3 par la liaison 16 et, d'autre part, au moteur 8 d'actionnement du manche 2, comme décrit ci-dessus. Dans cet exemple, le moteur 8 agit, par l'intermédiaire de la liaison 10, sur les organes de rappel élastiques 17 pour modifier leur position d'ancrage, annulant leur effort de rappel. Cela remplace les moyens de débrayage classiques permettant de maintenir la position du manche lorsque ce dernier est relâché par le pilote.

La figure 3 montre le cas d'un pilotage en effort, dans lequel un capteur d'effort 18 détecte l'effort exercé sur le manche 2 par le pilote (sans déplacement notable du manche) et le retransmet au calculateur 3.

A ce propos, on notera, comme on le verra plus en détail par la suite, que ce type de pilotage présente un certain nombre d'avantages par rapport au pilotage en déplacement précédemment évoqué.

Par ailleurs, dans l'exemple de la figure 3, le manche 2 est relié au moteur 8 par une barre de liaison essentiellement rigide 10, c'est-à-dire éventuellement légèrement déformable, permettant au moteur 8 d'asservir la position du manche 2 à la position de l'organe commandé 6, par l'intermédiaire de la servocommande 5.

Dans ce dernier cas, comme on le voit sur la figure 4, une tringlerie 19 de secours mécanique peut être prévue entre la servocommande 5 et des moyens d'amortissement mécaniques (ressort amortisseur) 20, dont des butées 21 limitent par ailleurs l'effet. La tringlerie permet de recopier la position de l'organe commandé sur le manche, via la servocommande, en cas de défaillance du système de commandes de vol électriques. Par ailleurs, il peut être prévu un moyen d'annulation 22 de l'effet du moteur d'entraînement 8 de l'organe de commande 2, par exemple un embrayage ou une coupure de l'alimentation du moteur.

Dans le cas du pilotage en effort, le manche est lié de façon rigide au moteur d'ancrage, lui-même asservi à la position de la servocommande. Le manche suivant la position de la servocommande à un écart dynamique près, un secours mécanique avec le même manche peut donc être envisagé. Les écarts sont absorbés par un filtre mécanique passif (ressort et amortisseur) capable de filtrer, entre autres, les mouvements dus à la commande multicyclique. Des butées sont prévues de part et d'autre du filtre pour fournir une limitation couvrant les cas d'embarquement de la servocommande. Le passage du mode électrique au mode mécanique est commandé soit par l'action du pilote, soit par une reconfiguration automatique du système de commandes de vol électriques en cas de défaillance majeure, la transition se faisant sans à-coups par libération de la contrainte du ressort.

En fonctionnement normal, le ressort permet d'absorber les écarts dynamiques entre la servocommande et le moteur d'ancrage. En cas de panne, il replace la servocommande sur la position du manche. Pour des raisons d'encombrement, la timonerie de liaison entre la servocommande et le moteur d'ancrage peut être réalisée par des câbles. Il en est de même pour le mélangeur mécanique prévu entre ceux-ci.

De ce qui précède, on voit donc que le pilote peut agir soit par déplacement du manche, soit par application d'un effort sur celui-ci.

Toutefois, dans tous les cas, seul le déplacement du manche en fonction de la position des gouvernes permet de restituer naturellement la position du rotor et la marge de commande, c'est-à-dire comme avec un manche classique. En effet, l'effort seul ne peut pas restituer la marge de commande lorsque le pilote n'agit pas sur les commandes. Ce cas est par exemple rencontré lorsque le pilote demande du pas collectif et qu'il n'agit pas sur le palonnier. La servocommande arrière se déplace vers sa butée et l'augmentation de l'effort n'avertit pas le pilote. Le déplacement des pédales, en revanche, informe le pilote de la position du rotor à tout instant. L'asservissement de la position d'ancrage des manches à la position des servocommandes est donc indispensable pour répondre à toutes les exigences opérationnelles.

Le principe du pilotage par objectif correspond à une gradation de l'action du pilote en objectif, et non plus en position des gouvernes comme dans les commandes classiques. Ce changement de liaison (manche/gouverne en action/ objectif) permet de présenter un appareil idéal à l'équipage. Le pilotage est réalisé par des actions correctrices autour de la position d'ancrage, d'où la notion de position relative ou d'action relative pour réaliser le pilotage et de position absolue pour restituer la position du rotor.

Le pilotage par objectif peut être envisagé soit par un déplacement du manche (figure 2), soit par l'application d'une force (effort) sur celui-ci (figure 3).

Le pilotage par déplacement est très précis sur l'objectif à suivre, mais demande une grande précision mécanique sur le manche (absence de jeux, frottement minimal) sous peine d'engendrer des ordres involontaires (pompage piloté, retard de commande, à-coups de commande). Pour un pilotage par objectif, la position d'équilibre du manche (effort nul) correspond à la tenue d'un paramètre. La bonne transition d'asservissement (objectif/tenue de paramètre) dépend également de la précision mécanique. L'ajout d'une bielle de contact est souvent nécessaire pour déterminer la phase de tenue. De plus, pour obtenir une précision de commande élevée, il est nécessaire d'avoir des débattements de pilotage importants, ce qui est d'autant plus gênant pour reconnaître les mouvements du pilote et ceux du système de commandes de vol électriques. La courbe de sensibilité de commande est donc difficilement réglable, notamment pour les grands débattements.

Dans le cas du pilotage en effort, seule l'application d'un effort sur le manche engendre un ordre de pilotage. Les jeux mécaniques et les frottements, réduits dans cette solution, ne posent pas de problème dans les transitions de phases (objectif/tenue). Le pilotage en effort présente comme avantage de ne pas se combiner avec les déplacements pour restituer la marge de commande. La courbe de sensibilité effort/objectif est facilement modifiable puisqu'elle est indépendante du mouvement du manche. Avec un tel système, la précision du pilotage est liée à la sensibilité d'effort et non à la sensibilité en déplacement, contrairement au pilotage conventionnel. Cela est déterminant pour l'utilisation des minimanches dont les débattements sont très inférieurs aux manches classiques.

La loi pour la mise en route du rotor, le décollage et l'atterrissage, qui est la mieux adaptée à toutes les configurations est la loi directe. Cette loi est également nécessaire en secours pour couvrir les cas de panne des capteurs d'effort. Une commutation entre les lois par objectif et cette loi directe est donc nécessaire.

Dans le cas du pilotage par objectif en déplacement, tout au moins dans la configuration classique, sans asservissement de l'organe de commande à l'organe commandé, la bijection position du manche / positions des servocommandes, n'est pas assurée, ce qui pose un problème de commutation des lois. Cette discontinuité des lois ne peut être gérée que par des artifices complexes. Ce changement, intervenant dans des phases critiques de vol, entraîne des difficultés de mise au point.

De plus, dans le cas de la loi de pilotage directe en déplacement, la sensibilité du manche est imposée par la correspondance entre les débattements des manches et ceux des gouvernes. Ce point est très pénalisant avec un minimanche dont le débattement est limité.

Dans le cas du pilotage par objectif en effort, avec restitution, selon l'invention, de la position du rotor, le manche rallie en permanence la position de la servocommande. La commutation des lois devient naturelle, avec une discontinuité faible (écart dynamique entre le moteur d'ancrage et la servocommande). De plus, la sensibilité du manche peut être adaptée indépendamment dans toutes les lois.

Par ailleurs, il s'est avéré que le pilotage à deux (pilote et copilote) pose généralement des problèmes de priorité de commande et de synchronisation des manches.

Ainsi, dans le cas d'un pilotage en déplacement, il se pose des problèmes de positionnement du manche opposé ; suiveur sur la position du manche, suiveur sur la position d'ancrage, et de commutation des manches sans engendrer des à-coups sur les servocommandes. Toutefois, un tel problème n'existe pas dans le cas du pilotage en effort selon l'invention. La position d'ancrage est commune aux deux manches, et les ordres en effort du pilote et du copilote sont sommés sans problème de priorité comme sur des manches classiques reliés mécaniquement entre eux. De plus, un bouton de priorité peut être prévu pour annuler les effets de l'autre manche en cas de défaillance.

Par ailleurs, dans le cas du pilotage en effort, le copilote ou le pilote peut contrôler les actions demandées par le pilote ou le copilote par l'appréciation du déplacement de son manche. Ce concept permet également d'initier l'équipage au découplage réalisé par le système en suivant les mouvements du manche. Cet apprentissage permet de ne pas perdre les réflexes nécessaires pour le pilotage suivant une loi directe. Cela n'est pas possible à réaliser pour le pilotage en déplacement, tout au moins dans la configuration classique.

En outre, on doit noter que le pilotage en déplacement impose une mécanique importante et sophistiquée pour être agréable au pilotage et pour éliminer les jeux et les frictions. Les réglages sont limités et difficiles à réaliser dans un encombrement restreint, tandis que le poids constitue un facteur défavorable.

En revanche, la technologie des capteurs d'effort, par exemple à base de jauges de contrainte ou de capteurs inductifs, est fiable et bien maîtrisée. Toutefois, une précision élevée pour les capteurs d'effort n'est pas nécessaire car le pilote réagit de façon relative par rapport aux sensations précédentes. L'étalonnage des jauges de contrainte ne pose donc pas de problème. De plus, cette technologie diminue considérablement les discontinuités d'effort comparativement aux systèmes classiques à base de bielles d'effort. Le faible encombrement est également un critère intéressant qui offre la possibilité de multiplier à volonté les capteurs et, dans le cas des minimanches, d'intégrer l'ensemble des moteurs et capteurs d'effort dans l'accoudoir du siège.

Par ailleurs, dans le cas du pilotage en déplacement, les limitations sont restituées de façon tactile en augmentant les efforts à l'aide d'une mécanique sophistiquée qui peut se dégrader (blocage, embarquement du moteur), tandis que, dans le cas du pilotage en effort, les limitations sont restituées en changeant, de façon programmée, la sensibilité du manche. La réalisation est simple et, en cas de changement des efforts sur les limitations, le pilotage reste possible sans discontinuité. Une commande (bouton notamment) peut être prévue pour supprimer le changement de sensibilité.

Nous aborderons ci-après quelques problèmes relatifs à la sécurité du système.

Dans le cas du pilotage en effort selon l'invention, le pilote et le copilote connaissent à chaque instant ce que réalise le système de pilotage (par le déplacement de l'ancrage du manche) et peuvent à tout moment contrer son action, notamment pour le découplage des commandes. Cela n'est pas vrai dans un système de pilotage en déplacement, en tout cas selon le principe classique dans lequel l'action du système n'est ressentie que par les attitudes que prend l'hélicoptère ou par des efforts sur le manche si le pilote agit sur la commande.

Le concept de pilotage en effort offre de plus l'avantage de disposer d'un système ayant une pleine autorité sur les gouvernes sous le contrôle du pilote.

Le nombre des pièces mécaniques en mouvement pour le pilotage en déplacement est plus important que pour le pilotage en effort, ce qui augmente les risques de défaillance (blocage, embarquement par exemple). Dans un pareil cas, le pilotage en déplacement devient hasardeux, voire même impossible. Par ailleurs, en cas de défaillance du moteur d'ancrage du manche, le pilotage en effort demeure opérationnel malgré des positions inconfortables de manche et une perte de la restitution des marges de commande sur le manche en panne.

En cas de perte de la mesure des efforts, une reconfiguration en pilotage en déplacement peut s'effectuer facilement, le manche étant correctement positionné par rapport à la servocommande : la transition se fait naturellement sans discontinuité. De plus, en cas de blocage du moteur d'ancrage du manche, le pilotage en effort demeure opérationnel, avec la perte de la restitution des marges de commande.

Par ailleurs, on doit noter que la loi de pilotage en effort est de conception simple puisqu'elle n'impose pas de limitations d'autorités aux servocommandes (système à pleine autorité) contrairement aux systèmes traditionnels avec des lois de pilotage en déplacement de type pilote automatique qui ont une autorité pour des raisons de sécurité.

De ce fait, la loi de pilotage en effort est homogène dans tous les domaines de vol. De plus, pour la loi de pilotage en effort, le réglage de la sensibilité est simple à réaliser car il se fait indépendamment de la position du manche (comme les systèmes traditionnels de type pilote automatique) simplement en adaptant le gradient (sensibilité) de l'effort / objectif de vitesse angulaire dans l'algorithme de calcul. En plus, cet algorithme permet avantageusement de changer en temps réel, au cours du vol, ce gradient en fonction des états de l'hélicoptère (par exemple : vitesse air, limitations de l'appareil) par adaptation de la courbe effort / consigne de pilotage.

En outre, grâce au perfectionnement de l'invention, en cas de perte des capteurs d'attitude, le système se reconfigure sans évolution vers un pilotage en loi directe, seule la perte d'assistance étant constatée. En cas de perte des informations d'effort, le système peut se reconfigurer en utilisant les informations de position du moteur d'ancrage. Le manche étant correctement placé par rapport à la servocommande, la transition se fait naturellement. De plus, aucune limitation d'autorité du système par rapport à la loi conventionnelle en déplacement ou commutation en loi nominale (hors commutation en loi directe pour atterrissages, décollages, notamment) ou commutation en loi dégradée, n'est nécessaire à la loi en effort.

Avantageusement, l'introduction des modes supérieurs (tenue d'assiette, tenue de cap, tenue de hauteur, notamment) est réalisée simplement par la prise en compte de l'écart entre la consigne de tenue et le capteur correspondant dans l'asservissement de la loi par objectif précitée, au niveau du terme intégral.

## Revendications

1. Dispositif à commandes de vol électriques pour aéronef, notamment un hélicoptère, comportant :
- un organe de commande volontaire (2), destiné à être actionné par le pilote dudit aéronef ;
- un calculateur de pilotage (3), recevant des ordres de la part dudit organe de commande volontaire (2) ;
- des moyens d'actionnement (5), commandés par ledit calculateur de pilotage (3) en fonction desdits ordres de l'organe de commande volontaire (2) ; et
- un organe commandé (6), actionné par lesdits moyens d'actionnement (5),
caractérisé en ce qu'il comporte des moyens d'asservissement (7) recevant des informations sur la position dudit organe commandé (6) et comprenant un moteur (8) susceptible de déplacer ledit organe de commande volontaire (2) pour asservir la position de ce dernier à celle dudit organe commandé (6).

2. Dispositif selon la revendication 1,
caractérisé en ce qu'il comprend au moins un capteur (12) pour détecter la position de l'organe commandé (6) et dont le signal permet de commander le moteur (8) de déplacement de l'organe de commande volontaire (2) pour l'amener dans une position correspondant à celle de l'organe commandé (6).

3. Dispositif selon l'une des revendication 1 ou 2,
caractérisé en ce que l'organe de commande volontaire (2) est relié au moteur (8) de déplacement de celui-ci par une liaison comportant des moyens de rappel élastiques (17).

4. Dispositif selon l'une des revendication 1 ou 2,
caractérisé en ce que l'organe de commande volontaire (2) est relié au moteur (8) de déplacement de celui-ci par une liaison essentiellement rigide (10).

5. Dispositif selon l'une des revendications 1 à 4,
caractérisé en ce qu'un filtre (11) est prévu entre lesdits moyens d'actionnement (5) et le moteur (8) de déplacement de l'organe de commande volontaire (2).

6. Dispositif selon l'une des revendications 1 à 5,
caractérisé par des moyens transducteurs (4) prévus entre l'organe de commande volontaire (2) et le calculateur de pilotage (3) .

7. Dispositif selon la revendication 6,
caractérisé en ce que lesdits moyens transducteurs (4) sont constitués par des moyens de recopie (15) de la position de l'organe de commande volontaire (2).

8. Dispositif selon la revendication 6,
caractérisé en ce que lesdits moyens transducteurs (4) sont constitués par au moins un capteur d'effort (18).

9. Dispositif selon l'une quelconque des revendications 1 à 8,
caractérisé en ce qu'une tringlerie (19) de secours mécanique est prévue entre lesdits moyens d'actionnement (5) et le moteur (8) de déplacement de l'organe de commande volontaire (2).

10. Dispositif selon la revendication 9,
caractérisé en ce que des moyens d'amortissement mécaniques (20) sont associés à ladite tringlerie (19).

11. Dispositif selon la revendication 10,
caractérisé en ce que des butées (21) sont prévues de part et d'autre desdits moyens d'amortissement mécaniques (20) pour limiter l'effet de ceux-ci.

12. Dispositif selon l'une quelconque des revendications 9 à 11,
caractérisé en ce qu'il est prévu un moyen d'annulation (22) de l'effet du moteur (8) de déplacement de l'organe de commande volontaire (2) .

## Patentansprüche

1. Vorrichtung mit elektrischen Flugsteuerungen für Luftfahrzeuge, insbesondere Hubschrauber, die umfaßt:
- ein Element (2) zur willkürlichen Steuerung, das dazu bestimmt ist, vom Piloten des Luftfahrzeugs betätigt zu werden,
- einen Rechner (3) für die Fluglageregelung, der Befehle von seiten des Elements (2) zur willkürlichen Steuerung empfängt,
- Antriebsmittel (5), die vom Rechner (3) für die Fluglageregelung in Abhängigkeit von den Befehlen des Elements (2) zur willkürlichen Steuerung gesteuert werden, und
- ein gesteuertes Element (6), das von den Antriebsmitteln (5) angetrieben wird,
dadurch gekennzeichnet, daß sie Regelungsmittel (7) aufweist, die Informationen über die Position des gesteuerten Elements (6) empfängt und einen Motor (8) umfaßt, der imstande ist, das Element (2) zur willkürlichen Steuerung zu verschieben, um die Position dieses mit der des gesteuerten Elements (6) zu regeln.

2. Vorrichtung nach Anspruch 1, dadurch gekennzeichnet, daß sie wenigstens einen Sensor (12) zum Erfassen der Position des gesteuerten Elements (6) umfaßt und dessen Signal gestattet, den Motor (8) zur Verschiebung des Elements (2) zur willkürlichen Steuerung zu steuern, um es in eine Position zu bringen, die der des gesteuerten Elements (6) entspricht.

3. Vorrichtung nach einem der Ansprüche 1 oder 2, dadurch gekennzeichnet, daß das Element (2) zur willkürlichen Steuerung mit dem Motor (8) zu dessen Verschiebung durch eine Verbindung verbunden ist, die elastische Rückstellmittel (17) aufweist.

4. Vorrichtung nach einem der Ansprüche 1 oder 2, dadurch gekennzeichnet, daß das Element (2) zur willkürlichen Steuerung mit dem Motor (8) zu dessen Verschiebung durch eine im wesentlichen steife Verbindung (10) verbunden ist.

5. Vorrichtung nach einem der Ansprüche 1 bis 4, dadurch gekennzeichnet, daß zwischen den Antriebsmitteln (5) und dem Motor (8) zur Verschiebung des Elements (2) zur willkürlichen Steuerung ein Filter (11) vorgesehen ist.

6. Vorrichtung nach einem der Ansprüche 1 bis 5, dadurch gekennzeichnet, daß zwischen dem Element (2) zur willkürlichen Steuerung und dem Rechner (3) für die Fluglageregelung Wandlermittel (4) vorgesehen sind.

7. Vorrichtung nach Anspruch 6, dadurch gekennzeichnet, daß die Wandlermittel (4) aus Mitteln (15) zur Nachbildung der Position des Elements (2) zur willkürlichen Steuerung bestehen.

8. Vorrichtung nach Anspruch 6, dadurch gekennzeichnet, daß die Wandlermittel (4) aus wenigstens einem Belastungssensor (18) bestehen.

9. Vorrichtung nach einem der Ansprüche 1 bis 8, dadurch gekennzeichnet, daß zwischen den Antriebsmitteln (5) und dem Motor (8) zur Verschiebung des Elements (2) zur willkürlichen Steuerung ein mechanisches Hilfsgestänge (19) vorgesehen ist.

10. Vorrichtung nach Anspruch 9, dadurch gekennzeichnet, daß mit dem Gestänge (19) mechanische Dämpfungsmittel (20) verbunden sind.

11. Vorrichtung nach Anspruch 10, dadurch gekennzeichnet, daß beiderseits der mechanischen Dämpfungsmittel (20) zur Begrenzung von deren Wirkung Anschläge (21) vorgesehen sind.

12. Vorrichtung nach einem der Ansprüche 9 bis 11, dadurch gekennzeichnet, daß ein Mittel (22) zur Aufhebung der Wirkung des Motors (8) zur Verschiebung des Elements (2) zur willkürlichen Steuerung vorgesehen ist.

## Claims

1. Fly-by-wire device for an aircraft, particularly a helicopter, including:
- an intentional control member (2) intended to be actuated by the pilot of the said aircraft,
- a piloting computer (3) which receives commands on the part of the said intentional control member (2);
- actuation means (5), which are controlled by the said piloting computer (3) on the basis of the said commands of the intentional control member (2); and
- a controlled member (6), actuated by the said actuation means (5),
characterized in that it includes slaving means (7) which receive information on the position of the said controlled member (6) and comprises a motor (8) capable of displacing the said intentional control member (2) in order to slave the position of the latter to that of the said controlled member (6).

2. Device according to Claim 1, characterized in that it comprises at least one sensor (12) for detecting the position of the controlled member (6) and the signal from which makes it possible to control the motor (8) for displacing the intentional control member (2) in order to bring it into a position corresponding to that of the controlled member (6).

3. Device according to either of Claims 1 and 2, characterized in that the intentional control member (2) is linked to the motor (8) for displacement thereof by a link including elastic return means (17).

4. Device according to either of Claims 1 and 2, characterized in that the intentional control member (2) is linked to the motor (8) for displacement thereof by an essentially rigid link (10).

5. Device according to one of Claims 1 to 4, characterized in that a filter (11) is provided between the said actuation means (5) and the motor (8) for displacing the intentional control member (2).

6. Device according to one of Claims 1 to 5, characterized by transducer means (4) provided between the intentional control member (2) and the piloting computer (3).

7. Device according to Claim 6, characterized in that the said transducer means (4) consist of means (15) for recopying the position of the intentional control member (2).

8. Device according to Claim 6, characterized in that the said transducer means (4) consist of at least one force sensor (18).

9. Device according to any one of Claims 1 to 8, characterized in that a mechanical backup rod linkage (19) is provided between the said actuation means (5) and the motor (8) for displacing the intentional control member (2).

10. Device according to Claim 9, characterized in that mechanical damping means (20) are associated with the said rod linkage (19).

11. Device according to Claim 10, characterized in that end stops (21) are provided on either side of the said mechanical damping means (20) in order to limit the effect thereof.

12. Device according to any one of Claims 9 to 11, characterized in that a means (22) is provided for cancelling out the effect of the motor (8) for displacing the intentional control member (2).
